# EUROPEAN PATENT APPLICATION

(11) **EP 1 134 647 A1**
(43) Date of publication of application: **19.09.2001**
(21) Application number: 01301909.6
(22) Date of filing: 02.03.2001
(51) Int. Cl.: G06F 3/023

(54) **Information processing device, character input method and computer-readable storage medium storing a program for executing this method**

(30) Priority: 17.03.2000 JP 2000075760
(71) Applicant: Seiko Instruments Inc., Chiba-shi, Chiba (JP)
(72) Inventor: Saruwatari, Tomozumi, c/o Seiko Instruments Inc., Chiba-shi, Chiba (JP)
(74) Representative: Sturt, Clifford Mark

(57) **Abstract**

There is provided a character group display unit for displaying a plurality of character groups at one time, a direction indication input unit for inputting a direction indication, a character group selection unit for causing movement of the cursor in response to a direction indication input, and selecting one among the character groups displayed, a group character display unit for displaying the number of characters included in the selected character group at one time, and a character selection unit for causing movement of the cursor in response to a direction indication input, and selecting one among the characters displayed.

## Description

This invention relates to an information processing device such as a portable telephone/PHS mobile equipment, PDA or wristwatch-type information processing device where character input is possible, a method for inputting characters to such an information processing device, and a computer-readable storage medium storing a program for executing this method on a computer.

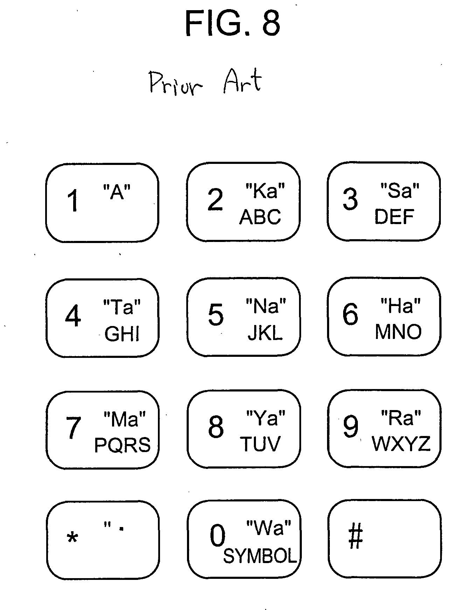

In a typical method for inputting characters (for example, the Japanese hiragana alphabet) with a related mobile information processing device such as a portable telephone, rows of characters such as "a", "ka", "sa" to "ra" and "wa wo un" are allotted to numeric input keys for "1" to "0". Fig. 8 is a view showing an assignment of each key on a related portable telephone.With this portable telephone, each character group of 50 characters and a plurality of alphabetic characters are allotted to and displayed at each key.

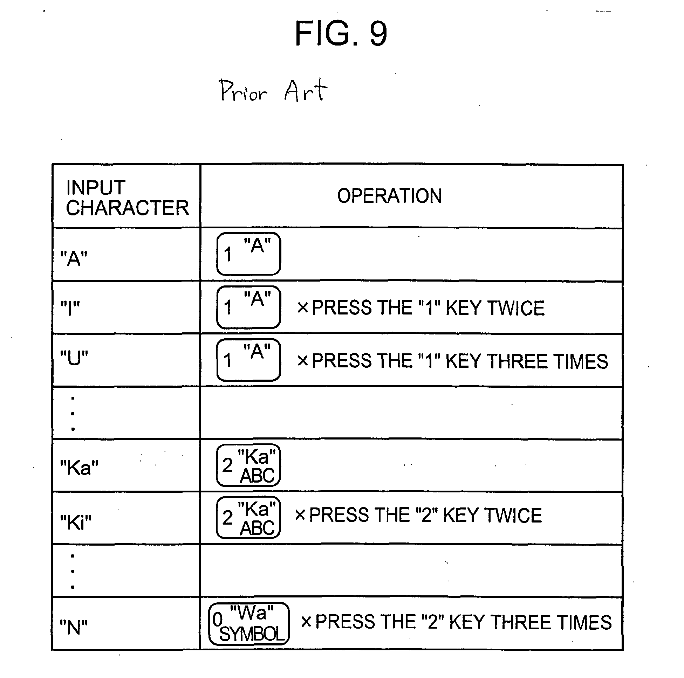

Fig. 9 is a view illustrating an operation for inputting on a related portable telephone.When characters are then inputted at portable equipment such as this portable telephone, the operator then searches for keys corresponding to the characters it is wished to input and the desired character is selected and inputted by pressing this key once or a number of times.For example, when "a" character group corresponds to the key "1", the key "1" is pressed once, and when it is wished to input "i", the key "1" is pressed twice. Characters for other rows such as "ka" character group etc. can also be inputted using the same operation.

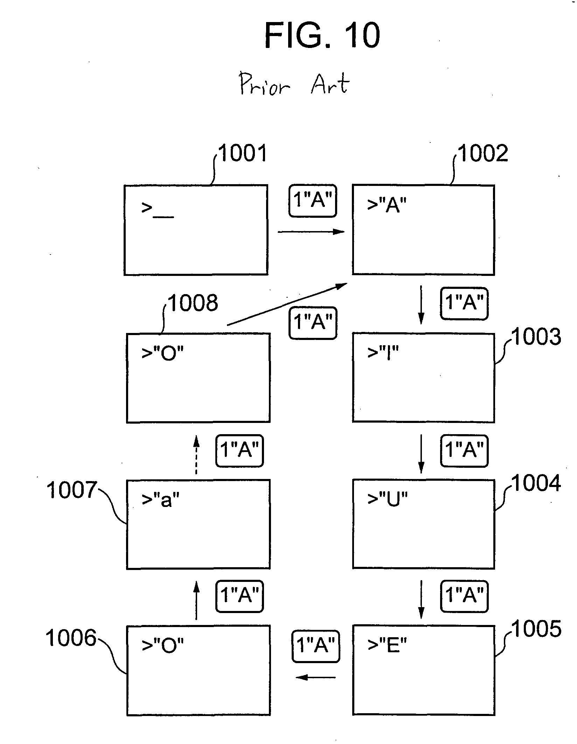

Fig. 10 is a view showing a procedure for character input on related portable telephone.According to character input processing on a related portable telephone, when a key is pressed, a character corresponding to the key pressed is selected cyclically and sequentially.For example, when there is no character input (1001 in the drawing), "a" is selected if the key "1" is pressed once (1002 in the drawing), hereinafter, characters in the "a" character group, such as "i", "u", then "e", are selected sequentially every time the key "1" is pressed (1003 to 1005 in the drawing).

When "o" is selected (1006 in the drawing), which is the last character in the "a" character group, if the key "1" is pressed, "a" in a smaller point size is selected (1007 in the drawing). Similarly, smaller point size characters in the "a" character group such as "i", "u" then "e" are selected sequentially every time the key "1" is pressed.When a smaller point size "o" is selected (1008 in the drawing), if the key "1" is then pressed, a larger point size "a" is selected again (1002 in the drawing).

There is, however, the problem that it is necessary to provide a large number of keys (at least 10 keys) in a method where each character group of the 50 character syllabary is made to correspond to a plurality of keys as mentioned above, which causes the device to be large. Further, the operator has to search for which key corresponds to a desired character, and when a key is pressed incorrectly, keys have to be pressed a large number of times (four times or more) which makes the operation complex.

In order to resolve the problems of the related art described above, it is the object of the present invention to provide an information processing device, a character input method, and computer-readable storage medium storing a program for executing this method on a computer which can bring about device miniaturization and which makes character input straightforward.

In order to resolve the aforementioned problems and achieve the aforementioned object, according to the first aspect of the invention, an information processing device comprises display means for displaying a plurality of character groups at one time, a direction indication input means for inputting a direction indication, character group selection means for causing movement of a selected position in response to a direction indication input using the direction indication input means, and selecting one among the character groups displayed on the character group display means, grouped character display means for displaying the number of characters included in the selected character group by using the character group selection means at the same time, and character selection means for causing movement of a selected position in response to a direction indication input using the direction indication input means, and selecting one among the characters displayed on the grouped character display means.

According to a first aspect of the invention, it is not necessary to provide a large number of keys corresponding to each character group, it is not necessary to find which keys correspond to the desired character, and it is no longer necessary to press a key a large number of times when a key is pressed in an erroneous manner.

Also, a character input method of a second aspect of the present invention comprises: a character group display step for displaying a plurality of character groups at one time,a direction indication input step for inputting a direction indication, a character group selection step for causing movement of a selected position in response to a direction indication input in the direction indication input step, and selecting one among the character groups displayed in the character group display step, a grouped character display step for displaying the number of characters included the selected character group by using the character group selection step at the same time, and a character selection step for causing movement of a selected position in response to a direction indication input in the direction indication input step, and selecting one among the characters displayed in the grouped character display step.

According to the second aspect of the invention, it is not necessary to provide a large number of keys corresponding to each character group, it is not necessary to find which keys correspond to the desired character, and it is no longer necessary to press a key a large number of times when a key is pressed in an erroneous manner.

Also, according to the third aspect of the invention, a computer-readable storage medium is stored with a program for executing the method described in the second aspect of the invention on a computer.

According to the third aspect of the invention, by storing a program for executing the method described in the second aspect of the invention on a computer, this program can be read by a machine and the method described in the second aspect of the invention can therefore be implemented by a computer.

Embodiments of the present invention will now be described by way of further example only and with reference to the accompanying drawings, in which:-
Fig. 1 is a view illustrating an example structure for an information processing device of this embodiment;
Fig. 2 is a block diagram showing a hardware configuration for the information processing device of this embodiment;
Fig. 3 is a block diagram functionally showing a configuration for the information processing device of this embodiment;
Fig. 4 is a view illustrating a group selection processing procedure for an information processing device of this embodiment;
FIG.5 is a view illustrating a character selection processing procedure for an information processing device of this embodiment;
Fig. 6 is a view illustrating a symbol selection processing procedure for an information processing device of this embodiment;
Fig. 7 is a view illustrating a processing procedure of character group selection of an information processing device of this embodiment in the case that the character type is English characters;
Fig. 8 is a view showing an assignment of each key on a related portable telephone;
Fig. 9 is a view showing an operation for character input on a related portable telephone; and
Fig. 10 is a view showing a procedure for character input on related portable telephone.

The following is a detailed description, with reference to the appended drawings, of an information processing device, a character input method, and a computer-readable storage medium storing a program for executing this method on a computer of this invention.

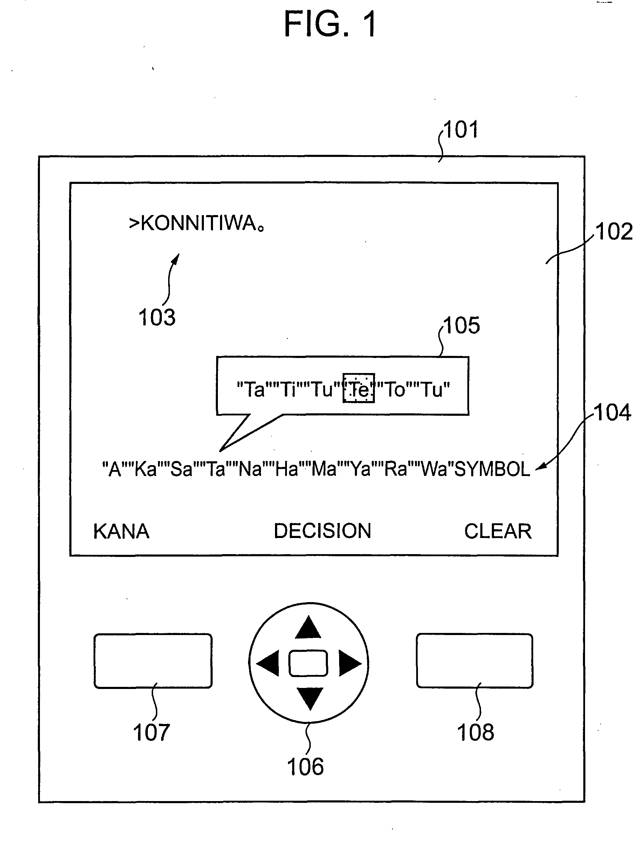

FIG. 1 is a view illustrating an example structure for an information processing device of this embodiment.ln FIG. 1, a display screen 102, a four-way controller 106, character type select key 107 and a clear key 108 are provided at the information processing device 101.A display screen 102 consists of an LCD display, an organic electroluminescence screen, etc. and comprises an input character display unit 103, a row display unit 104, and a character display unit 105, etc. Characters input by an operator are displayed on the input character display unit 103, and a plurality of character groups of each character group of 50 character syllabary of hiragana and katakana ("a", "ka" "sa" to "wa") and symbols, etc. are displayed on the line display unit 104.

On the character display unit 105, characters included in a selected character group (for example, the "ta", "chi", "tsu" "te" "to" for "ta" character group) are displayed in a balloon from the selected character group.The four-way controller 106 is a key for controlling a selected position (cursor), and an operator can move the cursor up, down, left and right on the di splay screen 102 using the four-way controller 106. Besides the four-way controller 106, other equipment for controlling a cursor such as a joy stick or a track stick can be used.

The character type select key 107 can select Japanese hiragana characters, Japanese katakana characters, or alphabetic characters (for example, English, French, German, Russian, etc. or the characters can be also be Korean or Arabic characters.). By pressing the character type select key, the operator can switch between the character type of character groups displayed on the line display unit 104, select a desired character type and input them. The clear key 108 is a key for deleting input characters, and an operator can delete input characters one at a time by pressing the clear key 108.

A wristwatch-type information processing terminal equipped with a multitude of functions such as a portable telephone/PHS mobile function, PDA function, GPS receiver function and digital camera function, etc., or a portable telephone/PHS mobile unit or PDA etc. can be considered for the information processing terminal 101.Mounting means such as a strap for wearing a wristwatch, etc. are provided in the case of a wristwatch-type information processing device. In addition to the display for character input, displays for the functions and operating mode of the information processing device 101 are also shown at the input screen 102. The character select key 107 and the clear key 108 can also be selected by the four-way controller 106 by being displayed on the display screen 102, and are not physically provided.
Information processing device configuration.

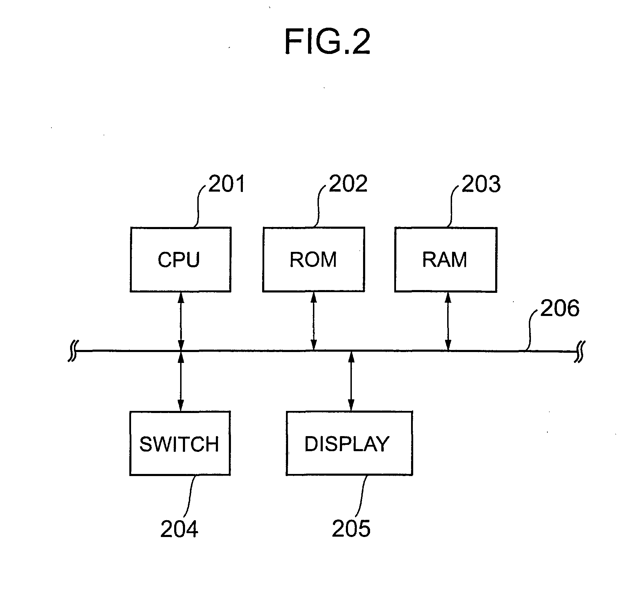

Next, a description is given of the hardware configuration of the information processing device 101.FIG. 2 is a block diagram showing an example structure for a hardware of the information processing device 101 of this embodiment.

The block diagram of FIG. 2 shows a CPU 201 for controlling the overall system comprising a ROM 202 for storing a start-up program, a RAM 203 used as a work area for the CPU 201, a switch (key) 204 for enabling an operator to input, and a display 205 such as a LCD display or an organic electroluminescence screen, etc. for displaying.Further, there is also shown a bus 206 for connecting each of the parts. The display 205 includes the display screen 102 described in FIG. 1, and the switch 204 includes the four-way controller 106 in FIG. 1, the character type select key 107 and the clear key 108.

### Functional configuration of the information processing device.

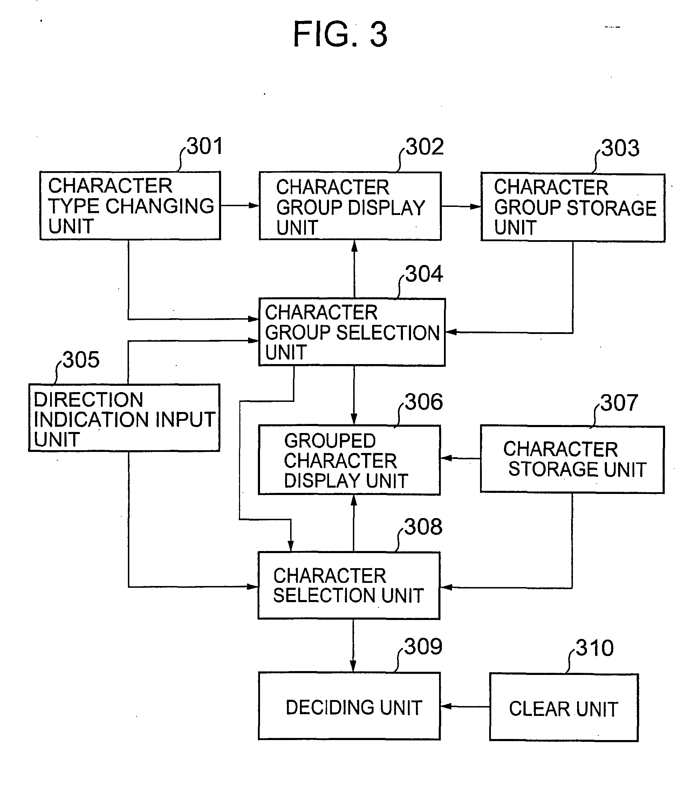

Next, a description is given of the functional configuration of the information processing device 101. FIG. 3 is a block diagram functionally showing a configuration for the information processing device 101 of this embodiment.ln FIG. 3, the information processing device 101 comprises a character type changing unit 301, a character group display unit 302, a character group storage unit 303, a character group select unit 304, a direction indication input unit 305, a grouped character display unit 306, a character storage unit 307, a character select unit 308, a deciding unit 309 and a clear unit 310.

The character type changing unit 301 changes a selection of character type every time the character type selection key 107 in FIG. 1 is pressed and gives notification of the selected character type to the character group display unit 302 and the character group selection unit 304. In addition to Japanese hiragana characters and Japanese katakana characters, the character type can be symbols such as "?" and "O", and alphabetic characters (for example, English, French, German, Russian, etc., and the characters can also be Korean or Arabic characters). The functions of each part of the character type changing unit 301 can be implemented by the CPU 201, the ROM 202, the RAM 203 and the switch 204 described in FIG. 2.

The character group display unit 302 displays information for some character groups, corresponding to a character type notified by the character type changing unit 301, by inputting from the character group storage unit 303. For example, in the case of hiragana, there are character groups of each character group of the 50 character syllabary and symbols displayed as "a", "ka" and "sa" to "wa" and "symbol". Further, the character group notified by the character group select unit 304 can be displayed enlarged, emphasized, reversed, in half-tone dot meshing, or by flashing, etc. The functions of each part of the character group display unit 302 can be implemented by the CPU 201, the ROM 202, the RAM 203 and the display 205 described in FIG. 2.

The character group storage unit 303 is pre-stored with some character groups. The functions of each part of the character group storage unit 303 can be implemented by a storage medium such as the ROM 202, the RAM 203 and the control mechanism described in FIG. 2. The character group select unit 304 moves the cursor in response to a direction indication from the direction indication input unit 305, selects one of displayed character groups (overlap the cursor on the display of the character group), and notifies the selected character group to the character group display unit 302, the grouped character display unit 306 and the character select unit 308. The functions of each part of the character group select unit 304 can be implemented by the CPU 201, the ROM 202 and the RAM 203 described in FIG. 2.

The direction indication input unit 305 takes at least two direction indications as input from an operator, i.e. directions of up, down, left and right, for outputting to the character group select unit 304 and the character select unit 308. The function of the direction indication input 305 can be implemented by the switch 204 (the four-way controller 106 described in FIG. 1) and the control mechanism described in FIG. 2. The grouped character display unit 306 takes as input information for some characters from the character storage unit 307, corresponding to the character group notified by the character group select unit 304, and then displays the information in a balloon from the character group.

This "balloon" is a frame which states and displays information relating to a character group.For example, when "a" character group is selected, "a", "i", "u", "e" and "o" are displayed in a balloon.When all of the characters of the selected character group cannot be displayed in a balloon at once, the characters of the character group are divided into sufficiently small subgroups so that each subgroup can be displayed at once.ln this case, the subgroup number of the subgroup currently displayed is also shown. It is also possible to display characters by scrolling a single character or a number of characters at once.Further, the grouped character display unit 306 displays characters notified from the character select unit 308 by enlarging, emphasizing, reversing or using half-tone dot meshing, etc. The functions of the grouped character display unit 306 can be implemented by the CPU 201, the ROM 202, the RAM 203 and the display 205 described in FIG. 2.

The character storage unit 307 is pre-stored with some characters. The functions of the character storage unit 307 can be implemented by the ROM 202 and the RAM 203, etc. and the control mechanism described in FIG. 2. The character select unit 308 moves the cursor in response to a direction indication from the direction indication input unit 305, selects one of displayed characters (overlap the cursor on the character), notifies the selected character to the character grouped display unit 306 and the deciding unit 309. The functions of the character select unit 308 can be implemented by the CPU 201, the ROM 202 and the RAM 203 described in FIG. 2.

When the decision key (the key located in the center of the four-way controller 106 described in FIG. 1) is pressed, the deciding unit 309 decides on the character notified from the character select unit 308, it is the character currently selected by the cursor, as a inputted character, and then adds the decided character to be displayed into the input character display unit 103. The functions of the deciding unit 309 can be implemented by the CPU 201, the ROM 202, the RAM 203, the switch 204 and the display 205 described in FIG. 2.

The clear unit 310 erases (clears) the last character inputted when the clear key 108 described in FIG. 1 is pressed. The functions of the clear unit 310 can be implemented by the CPU 201, the ROM 202, the RAM 203, the switch 204 and the display 205 described in FIG. 2. The character group storage unit 303 and the character storage unit 307 can also be provided on the same memory IC.It is also impossible to indicate a selected position by emphasizing selected character groups or making them bold, without displaying the cursor. Information processing device processing procedure.

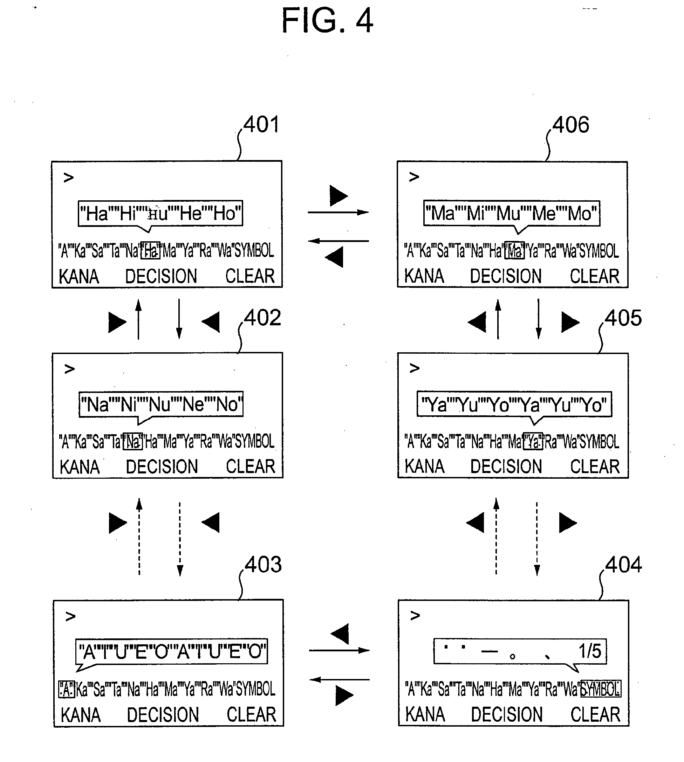

Next, a description is given of the content of character input processing carried out by the information processing device 101.According to this character input processing, if the cursor is positioned at a character group, character group selection processing for selecting a character group (in the case of the character type of hiragana or katakana, group selection processing) is performed. If the cursor is positioned at a character in a balloon, character select processing for selecting a character is performed.First, a description is given of group selection processing in the case of the character type of hiragana below. FIG. 4 is a view illustrating a processing procedure of group selection of the information processing device 101 of this embodiment.

In FIG. 4, first, when the group of "ha" is selected, the display of "ha" is emphasized and characters "ha", "hi", "hu", "he" and "ho" are displayed in the balloon (401 in the drawing).Now, if the left key of the four-way controller 106 is pressed, the cursor is moved next to the left to select the group of "na", and the display of "na" is emphasized, characters "na", "ni", "nu", "ne" and "no" are then displayed in the balloon (402 in the drawing).The cursor moves to the left as the left key is pressed, and each group of characters is selected one after another, the display of each group of characters is emphasized, and the characters of each group are displayed in the balloon in a similar manner.

When the cursor is moved to the group of "a" at the left end (403 in the drawing), if the left key is pressed further, the cursor rolls around to the right end and the "symbol" group (the group of symbols such as "?" and "O", etc.) is selected, and the display of "symbol" is emphasized, each symbol is then displayed in the balloon (404 in the drawing).Here, if the number of all symbols of the symbol group is too big to display at once, the symbols are divided into sufficiently small subgroups so that each subgroup can be displayed at once.

The subgroup number of the subgroup currently displayed is also shown. For example, if a group is divided into n subgroups (5 subgroups in the drawing), "n/N" is shown when an nth subgroup (the first subgroups in the drawing) is displayed. It is also possible to display characters by scrolling a single character or a number of characters at once when the cursor is at an end of the balloon.The values of n and N are arbitrary nonnegative integers, and n≦N.If the pressing of the left key is continued, the cursor moves left to select each character group one after another, and the "ha" group is then selected again (401 in the drawing) after selecting "ya" character group and "ma" character group, etc (405 and 406 in the drawing).

Conversely, if the right key of the four-way controller 106 is pressed, the cursor is moved next to the right to select the group of "ma", and the display of "ma" is emphasized, characters "ma", "mi", "mu", "me" and "mo" are then displayed in the balloon (406 in the drawing). The cursor moves right as the right key is pressed, and each group of characters is selected one after another, the display of each group of characters is emphasized, and the characters of each group are displayed in the balloon in a similar manner.When the cursor is moved to the group of "symbol" at the right end (404 in the drawing), if the right key is pressed further, the cursor rolls around to the left end and the group of "a" is then selected (403 in the drawing). If the right key is further pressed, the cursor moves right to select each group one after another, and the group of "ha" is then selected again (401 in the drawing) after selecting groups of "na", etc. (402 in the drawing).

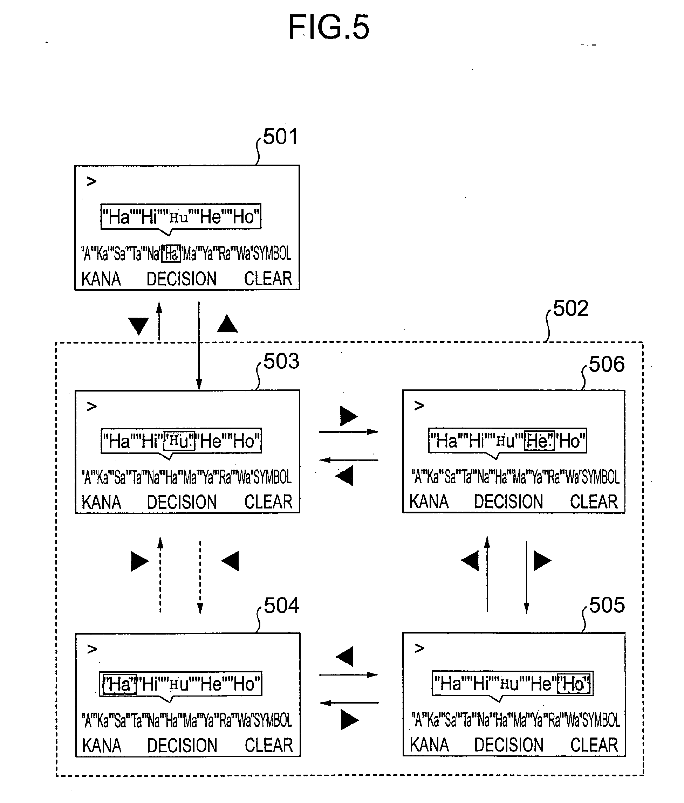

Next, a description is given of character select processing for selecting characters.FIG. 5 is a view illustrating a processing procedure of character selection of the information processing device 101 of this embodiment.ln FIG. 5, first, when the group of "ha" is selected, characters "ha", "hi", "hu", "he" and "ho" are displayed in the balloon (501 in the drawing). If the up key on the four-way controller 106 is now pressed, the cursor moves inside the balloon (502 in the drawing).At this time, it is possible to select any character as the first character, for example, the third character "hu" is selected as the first character (503 in the drawing). The selected character is emphasized.
If the left key is pressed, the cursor is then moved to the left. And when "ha" at the left end is selected (504 in the drawing), if the left key is selected, the cursor rolls around on "ho" at the right end and "ho" is then selected (505 in the drawing). If the left key is pressed further, the cursor moves left and "hu" is then selected again (503 in the drawing) after selecting "he" (506 in the drawing). Conversely, if the right key is now pressed, "ho" at the right end is selected (505 in the drawing) after selecting "he" (506 in the drawing). If the right key is pressed further, the cursor rolls around on "ha" at the left end and "ha" is selected (504 in the drawing). If the right key is pressed further, the cursor moves right and "hu" is then selected again (503 in the drawing) after selecting "hi".

Further, the cursor moves on the character group, i.e. on the display of "ha" character group (501 in the drawing) when the down key on the four-way controller 106 is pressed, even if the cursor is on any character within "ha" to "ho".ln this case, the cursor moves on a character in the balloon from the character group or on the character group from a character in the balloon by the up and down keys on the four-way controller 106. However, it is also possible to make this movement of the cursor by using other switching keys.Further, in this case, a selection of character groups or characters is performed by the left and right keys on the four-way controller 106. However, it is possible to make the selection by the up and down keys by displaying character groups or characters vertically.

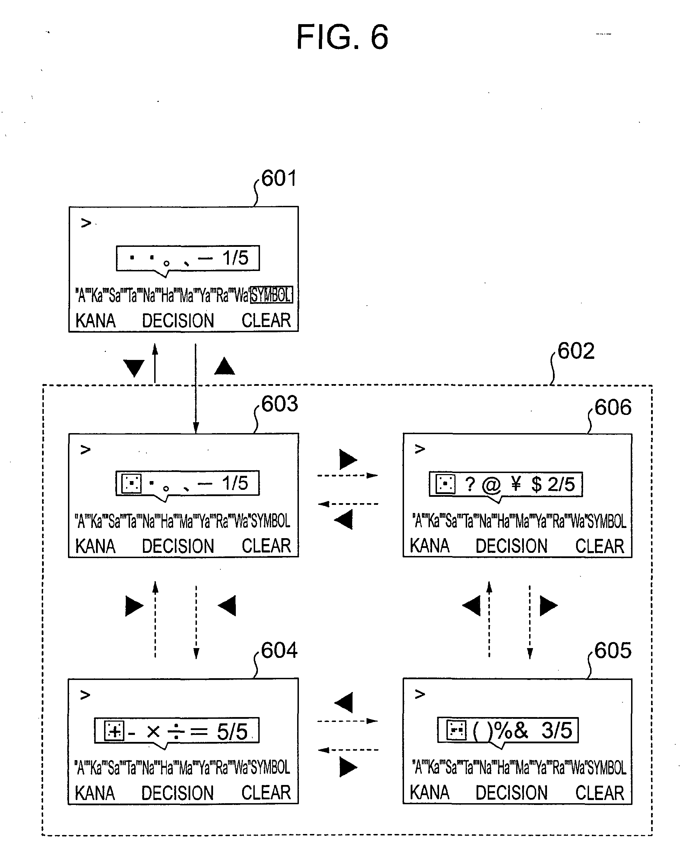

Next, a description is given of character select processing (symbol select processing) in the case of symbols.FIG. 6 is a view illustrating a processing procedure of symbol selection of the information processing device 101 of this embodiment.ln FIG. 6, first, if "symbol" group is selected, the symbols of page 1 of 5 (subgroup 1 of 5) is displayed in the balloon (601 in the drawing). If the up key on the four-way controller 106 is now pressed, the cursor moves inside the balloon (602 in the drawing). The selected symbol is emphasized.

When the cursor is at the left end (603 in the drawing), if the left key is pressed, symbols for page 5 of 5 (number 5 of 5 of the subgroups), which is the last page (the last subgroup), are shown (604 in the drawing) in the balloon. If the left key is pressed further more, the cursor is moved to the left, the page is switched when the cursor is moved to the left end, and symbols of page 1 of 5 are displayed (603 in the drawing) after page 4 of 5, page 3 of 5 and page 2 of 5 (the subgroups of page 4 of 5, page 3 of 5 and page 2 of 5).

Conversely, when the right key is pressed, the cursor is moved to the right, the page is switched when the cursor is moved to the right end, and symbols of page 1 of 5 are displayed (606, 605 and 604 in the drawing) after page 4 of 5, page 3 of 5 and page 2 of 5.Also, the cursor moves on the character group, i.e. on the display of "symbol" group (601 in the drawing) when the down key is pressed, even if the cursor is on any character on any page.It is possible to switch pages by pressing the up key when the cursor is positioned inside the balloon as part 2 of 5, 3 of 5, 4 of 5 and 5 of 5.

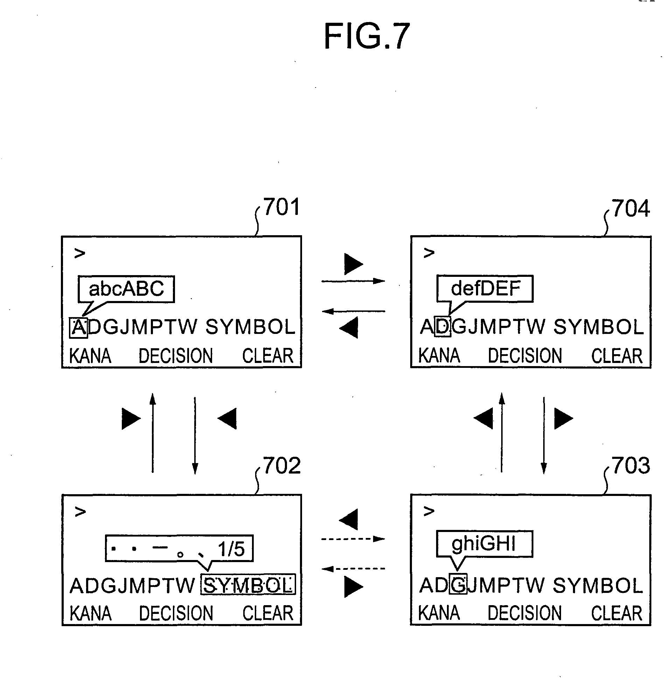

Next, a description is given of processing when English characters (English alphabetic characters) is selected by the type changing unit 301.In the case of alphabetic characters, for example, characters are stored by grouped some characters together such as "a", "b", "c", "A", "B" and "C" for "A" group or "d", "e", "f', "D", "E" and "F" for "D" group. FIG. 7 is a view illustrating a processing procedure of character group selection of the information processing device 101 of this embodiment for when the character type is English characters.ln FIG. 7, first, when the group of "A" is selected, the display of "A" is emphasized and characters "a", "b", "c", "A", "B" and "C" are displayed in the balloon (701 in the drawing).

Now, when the left key is pressed, the cursor rolls around to the right end and the "symbol" group (the group of symbols such as "?" and "O", etc.) is selected, the display of "symbol" is emphasized, and each symbol is then displayed in the balloon (702 in the drawing).When pressing of the left key is continued, the cursor moves left to select each group one after another, and the "A" group is then selected again (701 in the drawing) after the "G" group and the "D" group, etc (703 and 704 in the drawing). Conversely, if the right key is pressed, the cursor is moved next to the right to select the "D" group, and the display of "D" is emphasized, and characters "d", "e", "f", "D", "E" and "F" are then displayed in the balloon (704 in the drawing).

The cursor moves right as the right key is pressed, and each group is selected one after another, the display of each group is emphasized, and the characters of each group are displayed in the balloon in a similar manner.When the cursor is moved to the "symbol" group at the right end (702 in the drawing), if the right key is pressed further, the cursor the rolls around to the left end and the "A" group is then selected (701 in the drawing).Other processing of character selection for selecting alphabetic characters is the same as for hiragana and are not described.Also in the case of other character types, processing is carried out in the same way as for hiragana.

As described above, according to this embodiment, since there are provided a character group display unit 302 for displaying a plurality of character groups at the same time, a direction indication input unit 305 for inputting a direction indication, a character group selection unit 304 for moving the cursor in response to left and right direction indication input using the left right direction indication input unit 305 and selecting one of the character groups displayed on the character group display unit 302, a grouped character display unit 306 for displaying the number of characters included the selected character group by the character group selection unit 304 at the same time, and a character selection unit 308 for moving the cursor in response to left and right direction indication input using the left right direction indication input unit 305 and selecting one of the characters displayed on the character display unit 308, so, it is not necessary to provide a large number of keys corresponding to each character group, it is not necessary to find which keys correspond to the desired character, and it is no longer necessary to press a key a lot of times when a key is pressed in an erroneous manner.The device can therefore be miniaturized and character input is straightforward.

According to this embodiment, because characters are displayed in a balloon, it is easy see the relation of character groups and characters and easy to select them. Therefore, it is possible to input characters easily.According to this embodiment, by enlarging and emphasizing selected character groups and characters, selected character groups and characters can easily be confirmed and character input is therefore straightforward.

Also, characters can be divided into subgroups and displayed by each subgroup, therefore characters can be displayed by switching between the subgroups even if the number of characters included a character group is too big to display at the same time.Further, in this case, the subgroup number of the subgroup currently displayed is shown. Therefore, it is clear and easy to input characters.Further, when this embodiment is applied to an information processing device capable of being worn on a persons arm, this device can be made particularly small as a result of the number of keys being reduced and can therefore easily be worn on a persons arm.Further applications of the information processing device 101 are, for example, ① in a portable telephone/PHS mobile unit, ② in a PDA, and ③ in a wristwatch-type information processing device.

The computer program for implementing the character input method of the aforementioned embodiment can be stored on portable storage media such as magnetic discs such as floppy discs, etc., semiconductor memory (including those built-into cartridges and PC cards etc.) such as ROM, EPROM, EEPROM, and flash ROM, CD-ROMs and DVDs, and magneto-optical discs. Functions for implementing the aforementioned character input method can then be provided at this information processing device by installing the program stored on this storage media in ROM, RAM or a hard disc etc. built-into the information processing device.

This program can also be transmitted via a network such as a LAN, WAN, or the Internet, etc. for installation in a storage media of the information processing device.This program is by no means limited to a single configuration, and may also be distributed between a plurality of modules or libraries, or may function in cooperation with a separate program such as an OS.

As described above, according to the first aspect of this invention, since there are provided character group display means for displaying a plurality of character groups at the same time,a direction indication input means for inputting a direction indication,character group selection means for causing movement of a selected position in response to a direction indication input using the direction indication input means, and selecting one among the character groups displayed on the character group display means, grouped character display means for displaying the number of characters included in the selected character group by using the character group selection means at the same time, and character selection means for causing movement of a selected position in response to a direction indication input using the direction indication input means, and selecting one among the characters displayed on the grouped character display means, it is not necessary to provide a large number of keys corresponding to each character group, it is not necessary to find which keys correspond to the desired character, and it is no longer necessary to press the keys a lot of times when a key is pressed in an erroneous manner.Therefore, the device can be miniaturized and character input is straightforward.

Further, according to the second aspect of this invention, since there are provided a character group display step for displaying a plurality of character groups at one time,a direction indication input step for inputting a direction indication,a character group selection step for causing movement of a selected position in response to a direction indication input in the direction indication input step, and selecting one among the character groups displayed in the character group display step;a grouped character display step for displaying the number of characters included the selected character group by using the character group selection step at the same time, anda character selection step for causing movement of a selected position in response to a direction indication input in the direction indication input step, and selecting one among the characters displayed in the grouped character display step;it is not necessary to provide a large number of keys corresponding to each character group, it is not necessary to find which keys correspond to the desired character, and it is no longer necessary to press the keys a lot of times when a key is pressed in an erroneous manner.The device can be miniaturized and character input is straightforward.

Moreover, with a storage medium of a third aspect of the invention, the method disclosed in the second aspect of the invention is stored as a program for causing a computer to implement this method, the program can be read by a machine, and a computer can therefore be caused to implement the method disclosed in the second aspect of the invention.

## Claims

1. An information processing device comprising:
a display to display characters, symbols, and images;
a direction indication input switch to input a direction indication,
a character group selection circuit to cause movement of a selected position in response to a direction indication input using the direction indication input switch, and selecting one among the character groups displayed on the character group display;
a grouped character display to display a plurality of characters included in the selected character group by using the character group selection circuit at the same time; and
a character selection circuit to cause movement of a selected position in response to a direction indication input using the direction indication input switch, and selecting one among the characters displayed on the grouped character display.

2. A character input method, comprising:
a character group display step for displaying a plurality of character groups at one time;
a direction indication input step for inputting a direction indication;
a character group selection step for causing movement of a selected position in response to a direction indication input in the direction indication input step, and selecting one among the character groups displayed in the character group display step;
a grouped character display step for displaying a plurality of characters included in the selected character group by using the character group selection step at the same time, and
a character selection step for causing movement of a selected position in response to a direction indication input in the direction indication input step, and selecting one among the characters displayed in the grouped character display step;

3. A computer-readable storage medium, storing a program for causing the computer to execute the method described in claim 2.
